# EUROPEAN PATENT SPECIFICATION

(11) **EP 1 897 673 B1**
(45) Date of publication and mention of the grant of the patent: **12.02.2014**
(21) Application number: 06766840.0
(22) Date of filing: 16.06.2006
(51) Int. Cl.: B29C 47/36

(54) **METHOD FOR EXTRUDING STRIP RUBBER FOR TIRE STRUCTURING MEMBER**
VERFAHREN ZUM EXTRUDIEREN VON STREIFENGUMMI FÜR REIFENSTRUKTURIERUNGSGLIED
PROCEDE POUR EXTRUDER UNE BANDE DE CAOUTCHOUC POUR ELEMENT STRUCTURANT DE PNEU

(30) Priority: 27.06.2005 JP 2005186371
(43) Date of publication of application: 12.03.2008
(73) Proprietor: Bridgestone Corporation, Tokyo 104-8340 (JP)
(72) Inventor: UCHIDA, Yo Bridgestone Corporation, Kodaira-shi, Tokyo 187-8531 (JP); OGAWA, Yuichiro Bridgestone Corporation, Kodaira-shi, Tokyo 187-8531 (JP)
(74) Representative: Waldren, Robin Michael
(86) International application number: PCT/JP2006/312155
(87) International publication number: WO 2007/000906

(56) References cited:
- DE-U1- 20 120 960
- GB-A- 638 364
- JP-A- 10 058 522
- JP-A- 2002 355 878
- JP-A- 2003 033 978
- JP-A- 2003 039 526
- JP-A- 2003 245 935
- US-A1- 2002 071 337

## Description

### TECHNICAL FIELD

The present invention relates to a method for extruding rubber strip for tire constitutive members, which are wound onto a forming drum, and in particular aims to reduce installation space for the facility and improve energy efficiency.

### BACKGROUND ART

Conventionally, there has been known a tire forming method wherein tires are formed by extruding rubber strip from a small-sized extruder and wound directly onto a rotating green tire that is being formed, and laminated into a rubber member with a predetermined cross-section to thereby form part of the green tire. This type of method is applied in order to realize a small-sized extrusion system, improve the uniformity of the product tire, and allow a small-lot and multiple-size production. Such a forming method is disclosed, for example, in JP 10-58522A (or US 6106266A).

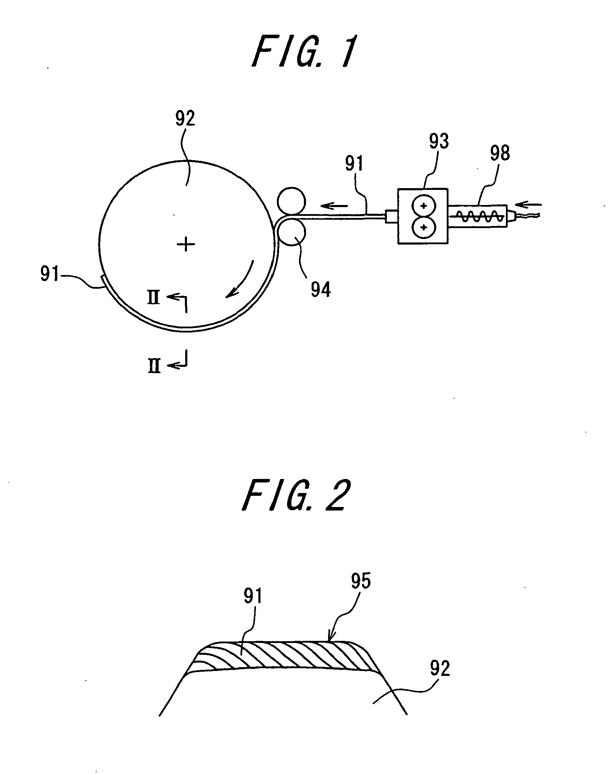

FIG. 1 is a schematic view showing the method for forming a rubber member by laminating a rubber strip, and FIG. 2 is a sectional view of the rubber strip formed by such method, which is taken along the line II-II in FIG. 1. In the illustrated method for forming a tire, a rubber strip 91 for tire constitutive members is extruded from an extruder 93 and guided directly onto a green tire 92 that is being formed. The rubber strip 91 is urged against the green tire 92 by using an application roller 94, while rotating the green tire 92, so as to form a rubber member 95.

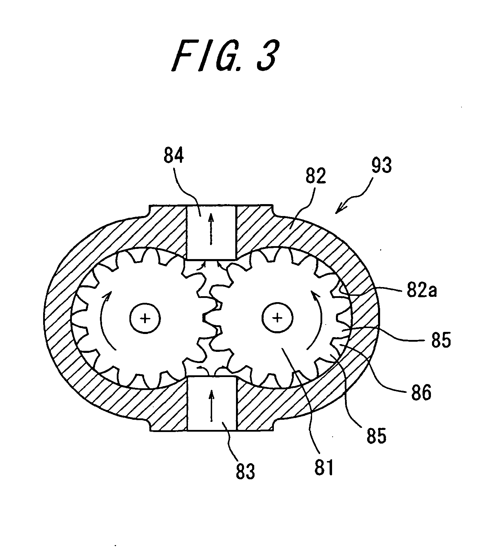

As the extruder 93, there is used a gear pump type extruder that allows extrusion of a constant volume regardless of the plasticity, temperature, etc. FIG. 3 is a sectional view schematically showing the internal structure of the gear pump type extruder. It can be seen that the extruder 93 includes a pair of gears that are arranged in a casing 82 and meshed with each other. The gears are rotated so that rubber supplied from the inlet 83 is introduced into a space 86 defined by the casing wall surfaces 82a and the teeth 85 of the gears, and moved in the space 86 along the casing wall surfaces 82a toward the outlet 84.

In order to extrude the rubber from the extruder 93, it is necessary to plasticize the rubber. Thus, there is provided a warming-up machine 98 as means for warming-up the rubber and feed it to the extruder 93. The warming-up machine 98 applied for the purpose of extrusion of rubber strip typically comprises a single screw type machine, which is widely used as a closed type warming-up machine.
US2002/071337 discloses a gear extruder having gas vent ports, for plasticizing and homogenising rubber mixtures. In one embodiment, the gear extruder is a double gear extruder having two pairs of gears.
GB2395161 discloses an extrusion molding machine and GB638364 discloses an extrusion press.
Extrusion machines are disclosed in JP 10058522, JP 2003033978, JP 2003039526, JP 2003 245935 and JP 2002355878.

### DISCLOSURE OF THE INVENTION

### (Task to be Solved by the Invention)

However, in order to attain a desired warming-up effect by means of a single screw type warming-up machine, it is necessary to increase the length of the screw, thereby requiring a large installation space. On the other hand, rubber strip extrusion systems, which are used for the process wherein a rubber strip is wound onto a forming drum, must be provided for each of a plurality of application stations, corresponding to rubber members for various purposes. Thus, it is highly important to reduce the space and realize a compact system. Conventionally, a single screw type warming-up machine used mainly for large-sized extruders is used also for this purpose, though it is unable to provide a satisfactory solution.

Furthermore, in a single screw type warming-up machine, rubber is plasticized by applying shearing force between the rubber and the barrel and/or screw flight. By such shearing force, the temperature of the rubber is excessively elevated beyond a desired level. It is thus necessary to cool the rubber and suppress its temperature elevation by passing cooling water though the barrel, thereby necessitating improvement in energy efficiency.

The present invention has been achieved in view of these problems, and it is the object of the invention to provide a method for extruding a rubber strip for tire constitutive members, allowing the facility to be made compact and having excellent energy efficiency without air being trapped in the rubber.

### (Measures for Solving the Task)

The present invention resides in a method for extruding a rubber strip for tire constitutive members, from a gear pump type extruder, comprising the steps of:
warming-up a rubber for said rubber strip by a warming-up machine; and
feeding the rubber from said warming-up machine to said extruder, either directly or indirectly through a closed pipeline,
wherein the warming-up machine is a gear pump type warming-up machine, characterized in that the warming-up machine and the extruder are operated so that, if the outlet side of the warming-up machine were open to atmosphere without being connected to the extruder, the rubber would be discharged with a volume flow rate that is larger than the discharge volume flow rate of the extruder.

### (Effects of the Invention)

According to the present invention, since rubber is warmed-up by using a gear pump type warming-up machine, it is possible to realize a compact arrangement of the warming-up machine. The rubber can be sufficiently warmed-up while being discharged from the warming-up machine, by the friction of the rubber with the casing wall surface or gears, or while being heated by the internal friction of the rubber as it flows through the warming-up machine. An excessive heating of the rubber does not occur, thereby suppressing an undesired elevation in temperature of the rubber and achieving a high energy efficiency.

### BRIEF DESCRIPTION OF THE DRAWINGS

FIG. 1 is a schematic view showing a method for forming a rubber member by winding a rubber strip.
FIG. 2 is a schematic sectional view of the rubber member taken along the line II-II in FIG. 1.
FIG. 3 is a schematic sectional view showing an internal structure of a conventional gear pump type extruder.
FIG. 4 is a schematic sectional view showing a rubber strip extrusion system according to one embodiment of the present invention.
FIG. 5(a) and 5(b) are schematic views showing a rotary driving section of the system wherein gears are driven by a common rotary driving device.
FIG. 6 is a schematic view showing a rubber strip extrusion system according to another embodiment of the present invention.

### Reference Numerals

- 1: Gear pump type extruder
- 2: Gear pump type warming-up machine
- 3: Feed roller
- 4: Extrusion head
- 5: Extrusion die orifice
- 6: Closed pipeline
- 10: Rubber strip extrusion system
- 11: Casing
- 11a: Inner surface of the casing
- 12: Gears
- 12a: Gear teeth
- 13: Inlet
- 14: Space
- 15: Outlet
- 17: Gear center shaft of the extruder
- 21: Casing
- 21a: Inner surface of the casing
- 22: Gears
- 22a: Gear teeth
- 23: Inlet
- 24: Space
- 25: Outlet
- 27: Gear center shaft of the warming-up machine
- 30: Driving device of the system
- 31: Motor with reduction device
- 32: Main driving gear
- 33: Driving gear for the extruder
- 34: Driving gear for the warming-up machine
- 40: Rubber strip extrusion system
- 41: Casing
- 41a, 41b: Wall surfaces of the casing
- 42: First stage gear of the warming-up machine
- 43: Second stage gear of the warming-up machine
- 44: Gear teeth of the first stage gear of the warming-up machine
- 45: Gear teeth of the second stage gear of the warming-up machine
- 46, 47: Spaces
- 50: Gear pump type warming-up machine
- 51: Inlet
- 52: Intermediate chamber
- 53: Outlet

### BEST MODE FOR CARRYING OUT THE INVENTION

The present invention will be described below with reference to the preferred embodiments shown in the accompanying drawings. FIG. 1 is a schematic sectional view showing a rubber strip extrusion system according to the present invention. The rubber strip extrusion system is designated as a whole by reference numeral 10, and comprises a gear pump type extruder 1 having an extrusion die head 4 at its tip end, which is provided with an extrusion die orifice 5 for extruding a rubber strip, a gear pump type warming-up machine 2 for warming-up the rubber to be extruded from the gear pump type extruder 1 and then directly supplying the rubber to the extruder 1, and a feed roller 3 for feeding the rubber to the warming-up machine 2.

The gear pump type extruder 1 comprises a casing 11 and a pair of gears 12, which are rotatably arranged within the casing 11 and meshed with each other. In the gear pump type extruder 1, the rubber supplied from the inlet 13 is accommodated within a space 14 defined by the neighboring gear teeth 12a of the gears 12 and the inner surface a of the casing 11, transferred along the inner surface 11a of the casing 11 toward the outlet side as the gears are rotated, released from the space 14 to the outlet 15 at a time point when the gear teeth 12a are separated from the inner surface 11a of the casing 11, and fed from the outlet 15 to the extrusion die head 4.

The gears 12 are driven at a rotational speed that is maintained constant, so that a constant volume of rubber can be extruded without noticeable fluctuation, thereby allowing formation of a uniform rubber strip.

Similarly, the gear pump type warming-up machine 2 comprises a casing 21 and a pair of gears 22, which are rotatably arranged within the casing 21 and meshed with each other. In the gear pump type warming-up machine 2, under the rotation of the gears 22, the rubber supplied from the inlet 23 is accommodated within a space 24 defined by the neighboring gear teeth 22a of the gears 22 and the inner surface 21a of the casing 21, transferred along the inner surface 21 a of the casing 21 toward the outlet side, and released from the space 24 to the outlet 25 when the gear teeth 22a are separated from the inner surface 21a of the casing 21.

The outlet 25 of the gear pump type warming-up machine 2 and the inlet 13 of the gear pump type extruder 1 are connected to each other through a closed pipeline 6 so that the rubber warmed-up by the warming-up machine 2 is supplied to the gear pump type extruder without excess or deficiency.

On this occasion, it is necessary to prevent generation of negative pressure between the warming-up machine 2 and the extruder 1, to thereby prevent air from being trapped into the rubber. To this end, the warming-up machine 2 and the extruder 1 must be operated under such operating conditions that the rubber is pushed from the warming-up machine 1 into the extruder 1. In other words, operation of the warming-up machine under the above-mentioned conditions means that, if the outlet side of the warming-up machine is open to atmosphere without being connected to the extruder 1, the warming-up machine 2 is operated so that the rubber is discharged with a volume that is larger than the discharge volume of the extruder 1. In practice, under such operating conditions, the rubber would circulate within the warming-up machine 2, or leakage of the rubber would be caused between the gear teeth 22a of the gears 22 and the inner surface 21 a of the casing 21.

In order to operate the warming-up machine 2 and the extruder 1 so that the rubber is pushed from the warming-up machine 1 into the extruder 1, a preferred measure is to use gears 12 of the extruder 1 and the gears 22 of the warming-up machine 2, which are same in number of teeth and pitch, and drive the gears 12 of the extruder 1 at a rotational speed that is higher than that of the gears 22 of the warming-up machine 2. The differential rotational speeds of the gears 12, 22 can be achieved by a method wherein individual rotary driving devices, such as motors, are provided for the extruder 1 and the warming-up machine 2, respectively, and controlled so as to rotate with differential speeds relative to each other. Alternatively, however, the gears 12, 22 may be driven by a common rotary driving device so as to realize a rotary driving device which is much simplified arrangement, and a rubber strip extrusion system which is made further compact.

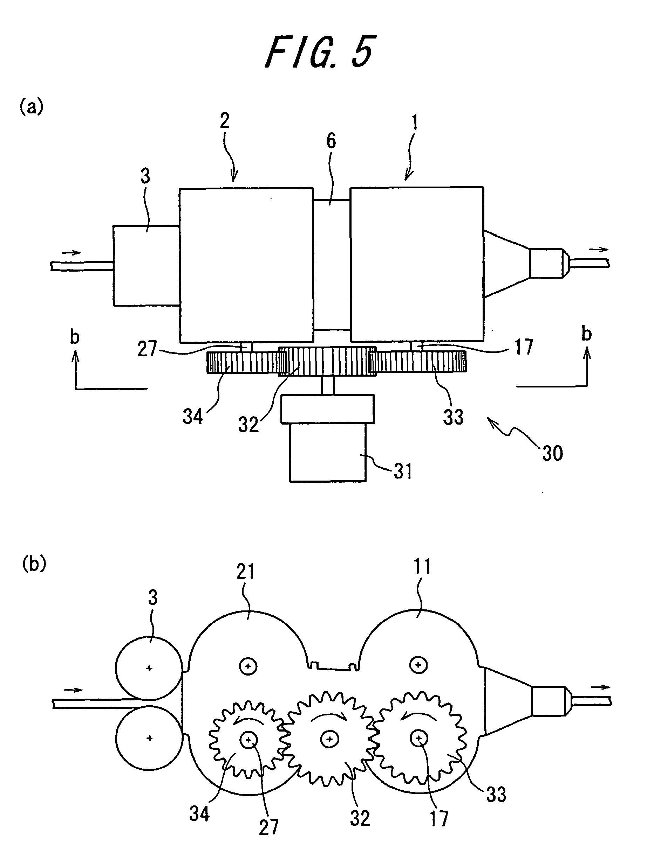

FIGS. 5(a) and 5(b) are schematic views showing a rotary driving section of the system wherein gears are driven by a common rotary driving device. More particularly, FIG. 5(a) is a plan view, and FIG. 5(b) is a view taken along the line b-b in FIG. 5(a). The rotary driving section 30 comprises a motor 31 with reduction device, which constitutes a common rotary driving device of the system, a main driving gear 32 that is directly coupled to the output shaft of the motor 31, a driving gear 34 for the warming-up machine 2, which is connected to the center shaft 27 of the gear 22 in the warming-up machine 2, and a driving gear 33 for the extruder 1, which is connected to the center shaft 17 of the gear 12 in the extruder 1.

Here, the number of teeth in the driving gear 34 for the warming-up machine 1 is smaller than the number of teeth in the driving gear 33 for the extruder 1, so that when the common motor 31 is operated, the gears 22 are driven at a relatively high rotational speed and the gears 12 are driven at a relatively low rotational speed. It is noted that the main driving gear 32 and the driving gear 33 constitute a transmission means for the extruder 1, and the main driving gear 32 and the driving gear 34 constitute a transmission means for the warming-up machine 2.

In the above-described embodiment, the rubber is supplied to the extruder 1 as being pushed from the warming-up machine 2, by driving their gears at different rotational speeds. However, the discharge volume may be differentiated by changing the number of teeth or pitches of the gears 12, 22 while rotating the gears at the same rotational speed.

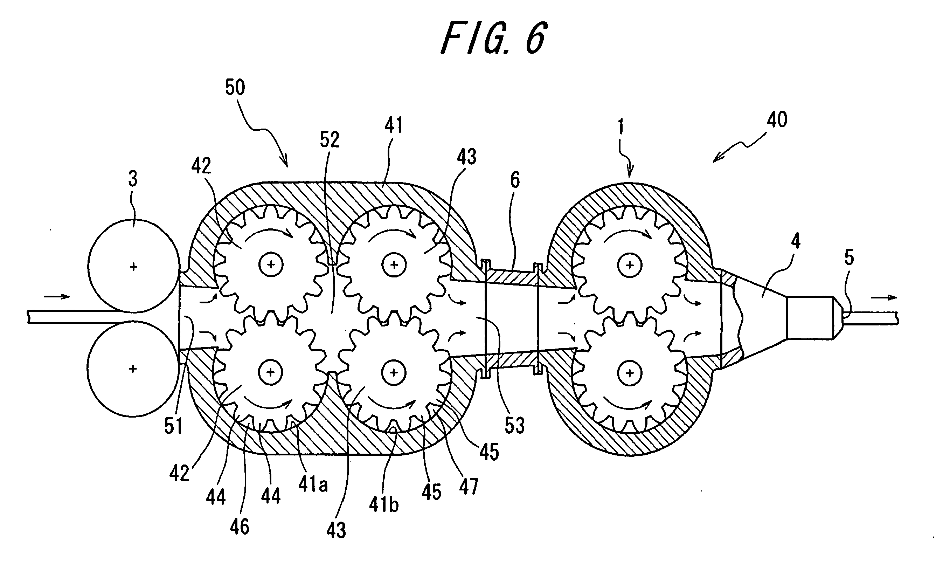

FIG. 6 is a schematic view showing a rubber strip extrusion system according to another embodiment of the present invention. In this embodiment, the rubber strip extrusion system is designated as a whole by reference numeral 40, and comprises a gear pump type extruder 1 having an extrusion die head 4 at its tip end, which is provided with an extrusion die orifice 5 for extruding a rubber strip, a gear pump type warming-up machine 50 for warming-up the rubber to be extruded from the gear pump type extruder 1 and then directly supplying the rubber to the extruder 1, and a feed roller 3 for feeding the rubber to the warming-up machine 50. The rubber strip extrusion system 40 according to the present embodiment differs from the rubber strip extrusion system 10 according to the previous embodiment only in the arrangement of the warming-up machine. More particularly, although the warming-up machine 2 in the rubber strip extrusion system 10 included only a single stage of gears 22 forming a pair, the warming-up machine 50 in the rubber strip extrusion system 40 includes two stages of gears 42, 43 forming two pairs. In this instance, the rubber is subjected to friction of a higher degree corresponding to the passage of the rubber through two stages of the gears, so as to provide an enhanced warming-up effect.

The gear pump type warming-up machine 40 comprises a casing 41 and two pairs of gears 42, 43, which are rotatably arranged within the casing 21. The gears 42 forming a pair meshed with each other, and the gears 43 forming another pair meshed with each other. It should be noted, however, that the gears 42 and 43 of the different stages are not meshed with each other. The gears 42, 43 are designed so that the gears 42 provides a discharge volume which is larger than the discharge volume of the gears 43 under a condition where the outlet side is open to atmosphere.

In the gear pump type warming-up machine 40, under the rotation of the gears 42 of the first stage, the rubber supplied from the inlet 51 is accommodated within a space 46 defined by the neighboring gear teeth 44 of the gears 42 of the first stage and the inner surface 41a of the casing 41, and transferred along the inner surface 41a of the casing 41 to an intermediate chamber 52. Subsequently, under the rotation of the gears 43 of the second stage, the rubber transferred to the intermediate chamber 52 is accommodated within a space 47 defined by the neighboring gear teeth 45 of the gears 43 of the second stage and the inner surface 41 b of the casing 41, and transferred along the inner surface 41 b of the casing 41 to an outlet 53.

It is important to ensure that the operating conditions of the gears 42, 43 of the first and second stages are determined so that the rubber supplied from the gears 42 of the first stage is pushed into the gears 43 of the second stage, so as to prevent generation of a negative pressure in the intermediate chamber 52 and thereby prevent air from being trapped into the rubber.

In order to realize the above-mentioned operating conditions, in the manner as explained above, the gears 42, 43 may be driven at different rotational speeds, or the number of teeth, teeth profile and/or pitch of the gears 42, 43 may be made different from each other.

### (Experiments)

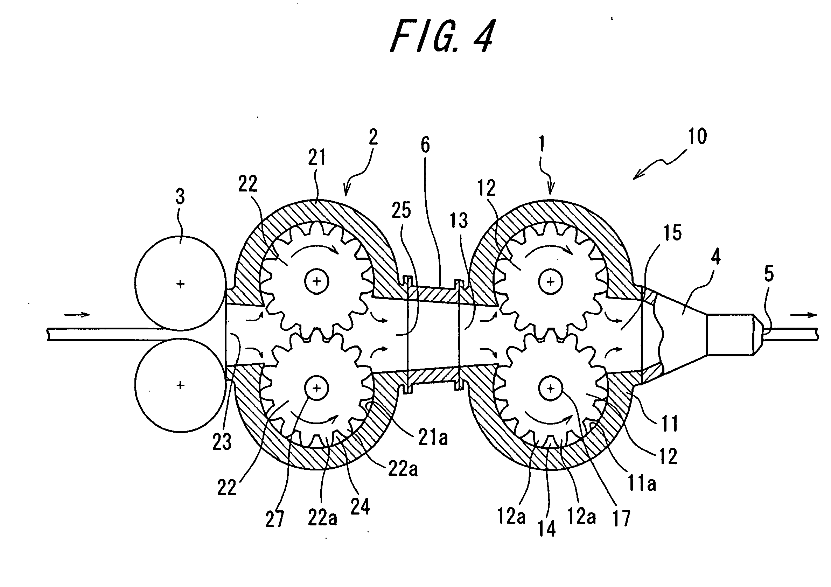

The inventors conducted comparative experiments by carrying out the rubber strip extrusion method according to the present invention with a gear pump type warming-up machine as shown in FIG. 4, and a conventional rubber strip extrusion method with a single screw type warming-up machine, to measure the warming-up performance, discharge volume, discharge temperature, fluctuation in discharge volume, the machine length and the consumption energy, the results of which are shown in Table 1 below.

Major specification and operating conditions of the warming-up machines and the extruders as used in the comparative experiments are also shown in Table 1. Here, the fluctuation in discharge volume refers to the difference between the maximum discharge volume and the minimum discharge volume, as represented by percentage with the average discharge volume 100%. Further, the machine length refers to the length of the long side of the warming-up machine, and the consumption energy means an average electric power consumed within a unit time in the warming-up machine upon extrusion of the rubber strip by carrying out the method according to the invention and the conventional method. The average electric powers as measured are represented by indices, with the data of the conventional method defined as 100 (the smaller the measured value, the lower the average electric power). It should be noted that the average consumed electric power of the extruder is that same for both of the method according to the invention and the conventional method.

**Table 1**

| | | Conventional method | Inventive method |
|---|---|---|---|
| Results of measurement | Warming-up performance | acceptable | acceptable |
| | Discharge volume (cm³/min) | 950 | 930 |
| | Discharge temperature (°C) | 110 | 102 |
| | Discharge volume fluctuation (%) | 1.5 | 1.3 |
| | Machine length (mm) | 1020 | 500 |
| | Consumption energy (index) | 100 | 74 |
| Specification and operating conditions | Type of warming-up machine | Single screw type | Gear pump type |
| | L/D of the warming-up screw | 8.0 | - |
| | Diameter of rotating portion in the warming-up machine (mm) | 75 (screw) | 75 (gear) |
| | Speed of warming-up machine (RPM) | 22.5 (screw) | 12 (gear) |
| | Speed of extruder (RPM) | 9.0 | 9.0 |
| | Extrusion die orifice area (mm²) | 24 | 24 |

As can be appreciated from Table 1, while the present invention provides warming-up performance, discharge volume and its fluctuation, which are substantially comparable to those of the conventional method, it is possible to reduce the length of the warming-up machine to about 50%. The present invention further makes it possible to lower the discharge temperature and significantly reduce the consumption energy.

### INDTSTRIAL APPLICABILITY

The rubber strip extrusion method and the rubber strip extrusion system for extruding a rubber strip for tire constitutive members according to the present invention can be applied to extrude a rubber strip for rubber members of various tires.

## Claims

1. A method for extruding a rubber strip for tire constitutive members, from a gear pump type extruder (1), comprising the steps of:
warming-up a rubber for said rubber strip by a warming-up machine (2, 50); and
feeding the rubber from said warming-up machine (2, 50) to said extruder (1), either directly or indirectly through a closed pipeline (6),
wherein the warming-up machine (2, 50) is a gear pump type warming-up machine, and **characterized in that** the warming-up machine (2, 50) and the extruder (1) are operated so that, if the outlet side (25, 53) of the warming-up machine (2, 50) were open to atmosphere without being connected to the extruder (1), the rubber would be discharged with a volume flow rate that is larger than the discharge volume flow rate of the extruder (1).

## Patentansprüche

1. Verfahren zum Extrudieren eines Gummistreifens für grundlegende Reifenelemente aus einem Zahnradpumpenextruder (1), das die folgenden Schritte aufweist:
Aufwärmen eines Gummis für den Gummistreifen mittels einer Aufwärmmaschine (2, 50); und
Zuführen des Gummis von der Aufwärmmaschine (2, 50) zum Extruder (1) entweder direkt oder indirekt durch eine geschlossene Rohrleitung (6),
wobei die Aufwärmmaschine (2, 50) eine Zahnradpumpen-Aufwärmmaschine ist und **dadurch gekennzeichnet, dass** die Aufwärmmaschine (2, 50) und der Extruder (1) so betätigt werden, dass, wenn die Austrittsseite (25, 53) der Aufwärmmaschine (2, 50) zur Atmosphäre hin offen wäre, ohne dass eine Verbindung zum Extruder (1) besteht, der Gummi mit einer Volumendurchflussgeschwindigkeit ausgestoßen würde, die größer ist als die Volumenausflussgeschwindigkeit des Extruders (1).

## Revendications

1. Procédé d'extrusion d'une bande de caoutchouc pour des éléments constitutifs d'un bandage pneumatique, à partir d'une extrudeuse du type à pompe à engrenages (1), comprenant les étapes ci-dessous :
chauffage d'un caoutchouc pour ladite bande de caoutchouc par l'intermédiaire d'une machine de chauffage (2, 50) ; et
amenée du caoutchouc de ladite machine de chauffage (2, 50) vers ladite extrudeuse (1), soit de manière directe soit de manière indirecte, à travers une canalisation fermée (6) ;
dans lequel la machine de chauffage (2, 50) est une machine de chauffage du type à pompe à engrenages, et **caractérisé en ce que** la machine de chauffage (2, 50) et l'extrudeuse (1) sont actionnées de sorte que, si le côté de sortie (25, 53) de la machine de chauffage (2, 50) était ouvert sur l'atmosphère sans être connecté à l'extrudeuse (1), le caoutchouc serait déchargé à un débit volumétrique supérieur au débit volumétrique de l'extrudeuse (1).
